# EUROPÄISCHE PATENTSCHRIFT

(11) **EP 1 642 207 B1**
(45) Veröffentlichungstag und Bekanntmachung des Hinweises auf die Patenterteilung: **29.08.2007**
(21) Anmeldenummer: 04740495.9
(22) Anmeldetag: 30.06.2004
(51) Int. Cl.: G06F 13/38, H04L 29/12

(54) **ZUORDNUNG VON STATIONSADRESSEN ZU KOMMUNIKATIONSTEILNEHMERN IN EINEM BUSSYSTEM**
ALLOCATION OF STATION ADDRESSES TO COMMUNICATION USERS IN A BUS SYSTEM
ATTRIBUTION D'ADRESSES DE STATION A DES ABONNES DE COMMUNICATION DANS UN SYSTEME DE BUS

(30) Priorität: 07.07.2003 DE 10330596
(43) Veröffentlichungstag der Anmeldung: 05.04.2006
(73) Patentinhaber: SIEMENS AKTIENGESELLSCHAFT, 80333 München (DE); Institut für Automation und Kommunikation E.V. Magdeburg, 39179 Barleben (DE)
(72) Erfinder: FLACH, Manfred, 92224 Amberg (DE); KROGEL, Petra, 39326 Wolmirstedt (DE); PÖSCHMANN, Axel, 39126 Magdeburg (DE); TRETTER, Albert, 92712 Pirk (DE)
(86) Internationale Anmeldenummer: PCT/EP2004/007120
(87) Internationale Veröffentlichungsnummer: WO 2005/003982

(56) Entgegenhaltungen:
- DE-A- 10 040 438
- DE-A- 19 713 240
- US-A- 4 847 834

## Beschreibung

Die Erfindung betrifft ein Verfahren zur Zuordnung von Stationsadressen zu Kommunikationsteilnehmern in einem Bussystem sowie Kommunikationsteilnehmer in einem Bussystem.

Für die Informationsübertragung zwischen einzelnen Teilnehmern eines Systems, also die Kommunikation der Teilnehmer, hat sich in der Digitaltechnik allgemein das Bussystem durchgesetzt. Ein Bussystem ist dadurch charakterisiert, dass mehrere Kommunikationsteilnehmer eingangs- und/oder ausgangsseitig parallel an einer gemeinsamen Sammelleitung, dem sogenannten Bus, angeschlossen sind. Ein Bussystem ist somit eine Einrichtung zur kollektiven Kommunikation mehrerer Teilnehmer untereinander, wobei jeder Teilnehmer mit jedem anderen direkt verkehren kann. Es wird zwischen parallelen und seriellen Bussystemen unterschieden. Der Datenaustausch erfolgt meist bit-parallel und byte-seriell, es ist aber auch ein bit-serieller Betrieb möglich. Je nach Variante spricht man von parallelen bzw. seriellen Bussystemen. Bitparallele Busse werden bevorzugt zur Übertragung hoher Datenraten über kurze Entfernungen eingesetzt, z. B. innerhalb eines Rechners. Die Vorzüge bitserieller Busse liegen im geringen Aufwand für Treiberstufen, Steckverbinder und Übertragungsleitungen (oft einfache Zwei-Draht-Leitung). Die Datenübertragung ist auch bei großen Entfernungen unproblematisch und der Hardwareaufwand für eine evtl. geforderte galvanische Trennung ist vergleichsweise gering.

Kommunikationsteilnehmer in einem Bussystem, z. B. an einen seriellen Bus angekoppelte Kommunikationsteilnehmer, benötigen üblicherweise eine eindeutige Stationsadresse, um miteinander kommunizieren zu können. Bei seriellen Bussystemen kommen bisher unterschiedliche Verfahren zur Vergabe von Stationsadressen für die einzelnen Kommunikationsteilnehmer zum Einsatz. Üblich sind eine manuelle Einstellung über Codierungsschalter an den Kommunikationsteilnehmern oder eine Adressvergabe vorab über den Bus, wobei jeder Kommunikationsteilnehmer von Anfang an adressierbar sein muss. Bei weiteren üblichen Verfahren ergibt sich die Stationsadresse anhand der Position des Kommunikationsteilnehmers am Bus. Der Datenverkehr in einem solchen System wird von einem so genannten Busmaster erzeugt, dem die Struktur des Busses bekannt sein muss. Adresskonflikte können in einem solchen Fall nicht auftreten. Der Busmaster erzeugt einen genau spezifizierten Datenrahmen, der so viele Datenfelder aufweist, wie Kommunikationsteilnehmer am Bus angeschlossen sind. Dieser Datenrahmen wird von einem Kommunikationsteilnehmer zum nächsten gesendet, wobei jeder Teilnehmer seine Daten entnehmen und neue Daten für den Busmaster mitgeben kann. Problematisch ist dieses Verfahren insbesondere, wenn ein Kommunikationsteilnehmer ausgetauscht werden muss und der Busmaster diese Änderung nicht sofort erkennt. Dadurch verschiebt sich der Datenrahmen und bestimmte Daten erreichen nicht mehr den richtigen Empfänger. Die beschriebenen Verfahren zur Vergabe von Adressen sind einerseits sehr fehleranfällig, wie die manuelle Vergabe mit Codierungsschaltern, oder erfordern schon ein Eindeutigkeitsmerkmal für die einzelnen Kommunikationsteilnehmer, bevor die Adressvergabe erfolgen kann. Dieses Eindeutigkeitsmerkmal muss sowohl der Adressvergabeeinheit als auch den Kommunikationsteilnehmern bekannt sein.

Aus der DE 197 13 240 A1 ist ein Verfahren zur automatischen Adressvergabe in einem CAN-Netz bekannt, bei dem jeder Busteilnehmer, dem noch keine Adresse zugeordnet ist, nach dem Einschalten des Systems einen Zufallswert für eine vorläufige Adresse erzeugt. Ist die vorläufige Adresse des Busteilnehmers bereits belegt, wird ein neuer Zufallswert für eine vorläufige Adresse erzeugt.

Aus der DE 29907265 U ist ein Datenübertragungssystem mit einer Konfigurationssteuereinrichtung und mehreren, über einen gemeinsamen Bus mit der Konfigurationssteuereinrichtung verbundenen Funktionseinheiten bekannt.

Der Erfindung liegt die Aufgabe zugrunde, die Zuordnung von Stationsadressen zu Kommunikationsteilnehmern in einem Bussystem zu vereinfachen.

Diese Aufgabe wird durch ein Verfahren zur Zuordnung von Stationsadressen zu Kommunikationsteilnehmern in einem Bussystem gelöst, wobei genau ein erster Kommunikationsteilnehmer, welcher selbstständig an einem Bus senden kann, einer Stationsadresse Daten zuordnen kann, welche einen weiteren Kommunikationsteilnehmer eindeutig identifizieren, oder eine Stationsadresse als nicht belegt kennzeichnen kann, bei welchem Verfahren jeweils in einem Kommunikationszyklus
- der erste Kommunikationsteilnehmer jeweils ein erstes Datenpaket an jede Stationsadresse sendet, wobei das erste Datenpaket gegebenenfalls der jeweiligen Stationsadresse zugeordnete Daten, welche einen weiteren Kommunikationsteilnehmer eindeutig identifizieren, enthält,
- ein oder mehrere weitere Kommunikationsteilnehmer jeweils ein zweites Datenpaket mit ihrer Stationsadresse und den jeweiligen weiteren Kommunikationsteilnehmer eindeutig identifizierenden Daten an den ersten Kommunikationsteilnehmer senden, wobei die den jeweiligen weiteren Kommunikationsteilnehmer eindeutig identifizierenden Daten vom ersten Kommunikationsteilnehmer der jeweiligen Stationsadresse zugeordnet werden und
- der erste Kommunikationsteilnehmer ein drittes Datenpaket mit der Information, welche Stationsadressen als nicht belegt gekennzeichnet sind, an alle weiteren Kommunikationsteilnehmer sendet,
wobei ein Kommunikationsteilnehmer, welcher in einem früheren Kommunikationszyklus bereits ein zweites Datenpaket mit diesen Kommunikationsteilnehmer eindeutig identifizierenden Daten an den ersten Kommunikationsteilnehmer gesendet hat und welcher in einem späteren Kommunikationszyklus ein erstes Datenpaket mit Daten, welche diesen Kommunikationsteilnehmer nicht eindeutig kennzeichnen, empfängt, seine Stationsadresse automatisch in eine der als nicht belegt gekennzeichneten Stationsadressen ändert.

Diese Aufgabe wird weiterhin durch die Gegenstände der Ansprüche 5 und 6 gelöst.

Der Erfindung liegt die Idee zugrunde, die Zuordnung von Stationsadressen zu Kommunikationsteilnehmern in einem Bussystem, insbesondere einem seriellen Bussystem, von den Kommunikationsteilnehmern selbst durchführen zu lassen, unter Nutzung zentral verfügbarer Informationen. Das erfindungsgemäße Verfahren sorgt dafür, dass die Stationsadressen der Kommunikationsteilnehmer eindeutig sind. Mehrfach vergebene Stationsadressen werden automatisch erkannt und vorliegende Adresskonflikte werden dezentral von den betroffenen Kommunikationsteilnehmern selbständig durch zufällige Wahl einer potentiell freien, nicht belegten Stationsadresse aufgelöst. Es handelt sich somit um ein Verfahren zur Autokonfiguration von Stationsadressen. Bereits vergebene Stationsadressen von ansprechbaren Kommunikationsteilnehmern werden dabei nicht beeinflusst. Damit werden alle Kommunikationsteilnehmer erreichbar und ansprechbar. Bei dem Verfahren handelt es sich nicht um eine zentrale Vergabe von Stationsadressen, es kann allerdings die Voraussetzung dafür sein. Beim erfindungsgemäßen Verfahren sind alle im Bussystem gültigen physikalischen Stationsadressen völlig frei verwendbar. Es werden weder Beziehungen beispielsweise mit der physikalischen Position des Kommunikationsteilnehmer vorausgesetzt noch wird der Adressraum in irgendeiner Weise eingeschränkt. Das Verfahren erfordert weder eine zusätzliche Verkabelung zwischen den Kommunikationsteilnehmern noch bestimmte Restriktionen bezüglich der Topologie. Es ist anwendbar auf die endgültig für einen Betrieb aufgebaute Bustopologie. Da die Stationsadresse vom Kommunikationsteilnehmer selbst verwaltet wird, ist auch beim Austausch eines Kommunikationsteilnehmers, z. B. beim Baugruppentausch, weder mit Störungen noch mit Adressierungsfehlern zu rechnen.

Mischkonfigurationen mit Kommunikationsteilnehmern, welche keine Mittel zum Senden von zweiten Datenpaketen mit den jeweiligen Kommunikationsteilnehmer eindeutig identifizierenden Daten an einen ersten Kommunikationsteilnehmer aufweisen und welche ihre Stationsadresse nicht automatisch ändern können, sind ohne negative Beeinflussung dieser Kommunikationsteilnehmer möglich.

Der Kommunikationszyklus wiederholt sich mit einer gewissen Zyklusdauer. Um die Kommunikationsressourcen möglichst wenig mit dem Versenden, Weiterleiten, Empfangen und Verarbeiten der für die Zuordnung von Stationsadressen zu Kommunikationsteilnehmern erforderlichen Datenpakete zu belasten, wird gemäß einer vorteilhaften Ausgestaltung der Erfindung vorgeschlagen, dass die Zyklusdauer des Kommunikationszyklus variabel ist. Damit kann die Zyklusdauer z. B. in einer Anfangsphase, in welcher die Adressierung noch nicht weit fortgeschritten ist, kleiner gewählt werden im Vergleich zu einer späteren Phase im Adressierungsvorgang, in welcher weniger Adressierungsbedarf besteht. Insbesondere kann nach erfolgreichem Abschluss der Zuordnung von Stationsadressen zu Kommunikationsteilnehmern der beschriebene Kommunikationszyklus nur noch mit einer im Vergleich zu anderen Kommunikationszyklen vergleichsweise großen Zyklusdauer durchgeführt werden, um z. B. auf Änderungen im Bussystem durch Tausch oder Ausfall von Kommunikationsteilnehmern und Ähnlichem reagieren zu können.

Auf der Grundlage des erfindungsgemäßen Verfahrens zur Zuordnung von Stationsadressen zu Kommunikationsteilnehmern in einem Bussystem wird eine vorteilhafte Ausgestaltung des Verfahrens vorgeschlagen, bei welcher Geräteinformationen in Speichermitteln der weiteren Kommunikationsteilnehmer speicherbar sind, wobei die Speichermittel über den Bus vom ersten Kommunikationsteilnehmer adressierbar sind und die Geräteinformationen vom ersten Kommunikationsteilnehmer auslesbar sind. So können beispielsweise alle für eine automatische Konfiguration notwendigen Geräteinformationen direkt in einem Speicher der weiteren Kommunikationsteilnehmer hinterlegt werden. Für das Auslesen wird z. B. ein nachrichtenorientiertes Übertragungsverfahren, wie es bei den meisten seriellen Bussystemen bereits definiert ist, benutzt. Somit steht dem ersten Kommunikationsteilnehmer jederzeit ein aktuelles Abbild der Geräteinformationen jedes am Bus befindlichen weiteren Kommunikationsteilnehmers zur Verfügung. Die Geräteinformationen bestehen z. B. aus einer Identifikation sowie möglichen Konfigurationen und Parametrierungen.

Damit ist die Projektierung und Wartung eines Bussystems ohne vom Hersteller gelieferte Geräteinformationen in Form von elektronischen Datenblättern möglich. Damit besteht die Möglichkeit weitere Schritte bei der Projektierung eines Bussystems, insbesondere eines seriellen Bussystems, zu automatisieren. Bei Verwendung dieser vorteilhaften Ausgestaltung der Erfindung steht einem Projektierer stets eine Gegenüberstellung der projektierten Kommunikationsteilnehmer mit deren Konfiguration und Parametrierung und der tatsächlich am Bus vorliegenden Situation zur Verfügung. Somit können Projektierungsfehler, Fehler bei der Verkabelung und der Wahl der Kommunikationsteilnehmer an einer zentralen Stelle analysiert und entsprechend behoben werden.

Nachfolgend wird die Erfindung anhand der in den Figuren dargestellten Ausführungsbeispiele näher beschrieben und erläutert.

Es zeigen:
- FIG 1: ein Bussystem mit Kommunikationsteilnehmern,
- FIG 2: ein erstes Datenpaket,
- FIG 3: ein drittes Datenpaket,
- FIG 4: die Kommunikation zwischen einem ersten Kommunikationsteilnehmer und weiteren Kommunikationsteilnehmern,
- FIG 5: die Kommunikation zwischen einem ersten Kommunikationsteilnehmer und einem weiteren Kommunikationsteilnehmer ohne Adresskonflikt,
- FIG 6: die Kommunikation zwischen einem ersten Kommunikationsteilnehmer und einem weiteren Kommunikationsteilnehmer ohne Mittel zum Senden von zweiten Datenpaketen und
- FIG 7: die Kommunikation zwischen einem ersten Kommunikationsteilnehmer und weiteren Kommunikationsteilnehmern bei Vorliegen eines Adresskonflikts.

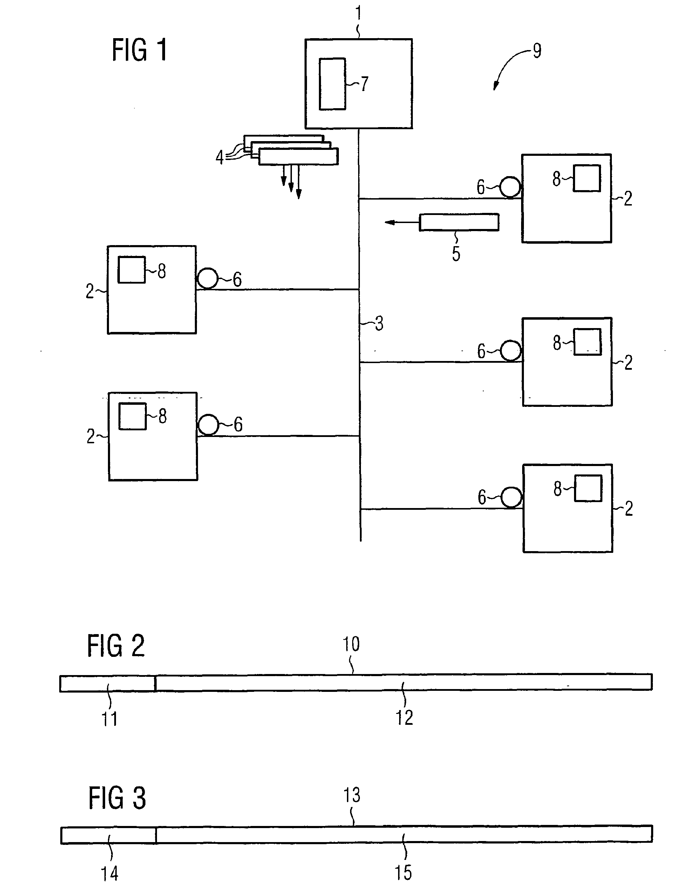

FIG 1 zeigt ein serielles Bussystem 9 mit Kommunikationsteilnehmern 1, 2. Die Kommunikationsteilnehmer 1, 2 sind über einen Bus 3 miteinander verbunden. Ein erster Kommunikationsteilnehmer 1 in dem Bussystem 9 weist Mittel 7 zur Zuordnung von Daten, welche einen weiteren Kommunikationsteilnehmer 2 eindeutig identifizieren zu einer Stationsadresse 6 und zur Kennzeichnung einer Stationsadresse 6 als nicht belegt auf. Der erste Kommunikationsteilnehmer 1 kann jeweils ein erstes Datenpaket 4 an jede Stationsadresse 6 senden, wobei das erste Datenpaket 4 gegebenenfalls der jeweiligen Stationsadresse 6 zugeordnete Daten, welche einen weiteren Kommunikationsteilnehmer 2 eindeutig identifizieren, enthält. Die weiteren Kommunikationsteilnehmer 2 im Bussystem 9 weisen Mittel 8 zum Senden von zweiten Datenpaketen 5 mit den jeweiligen Kommunikationsteilnehmer 2 eindeutig identifizierenden Daten an den ersten Kommunikationsteilnehmer 1 auf und können ihre Stationsadresse 6 automatisch selbständig ändern.

FIG 2 zeigt ein erstes Datenpaket 10. Das erste Datenpaket 10 weist einen ersten Abschnitt 11 auf, welcher den Namen des Datenpakets enthält.. In einem zweiten Abschnitt 12 des ersten Datenpakets 10 sind weitere Informationen zur Struktur des ersten Datenpakets enthalten, z. B. eine Identifikation des Datenpakets und Daten, welche einen weiteren Kommunikationsteilnehmer eindeutig identifizieren, wie z. B. Bauteildaten und/oder eine Seriennummer.

FIG 3 zeigt ein drittes Datenpaket 13. Das dritte Datenpaket 13 weist einen ersten Abschnitt 14 auf, welcher den Namen des dritten Datenpakets enthält. In einem zweiten Abschnitt 15 des dritten Datenpakets 13 sind weitere Informationen zur Struktur des dritten Datenpakets 13 enthalten. Solche Informationen sind z. B. eine Identifikation des dritten Datenpakets, Statusinformationen, Informationen zu kritischen Busparametern und/oder eine Information, welche Stationsadressen als nicht belegt gekennzeichnet sind.

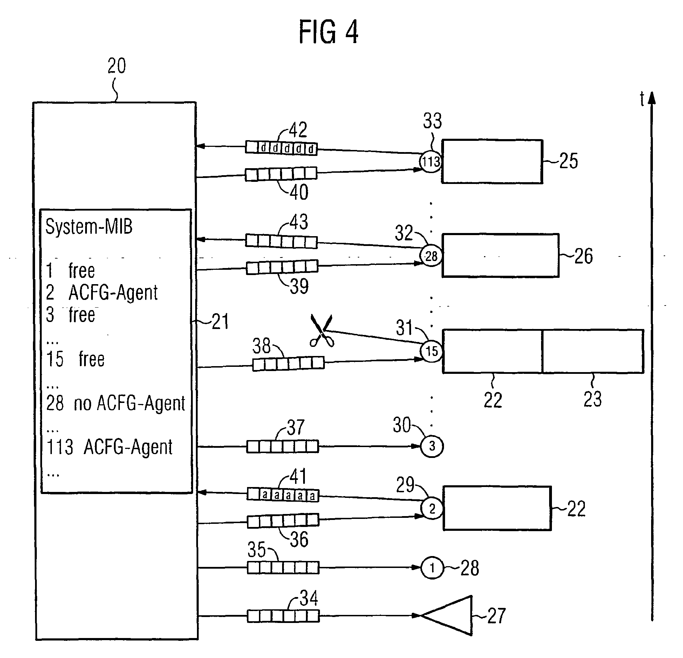

FIG 4 zeigt die Kommunikation zwischen einem ersten Kommunikationsteilnehmer, dem so genannten ACFG-Manager 20, und weiteren Kommunikationsteilnehmern, in diesem Fall vier so genannten ACFG-Agents 22 bis 25 (ACFG = Autokonfiguration) und einem weiteren Kommunikationsteilnehmer 26. Den Kommunikationsteilnehmern wird also jeweils eine von zwei unterschiedlichen Rollen zugeordnet. Der ACFG-Manager 20 übernimmt die steuernde Rolle für den sogenannten ACFG-Mechanismus. Zu einem Zeitpunkt darf immer nur ein ACFG-Manager 20 am Bussystem aktiv sein. Ein ACFG-Manager 20 muss selbständig am Bus senden können. Bei Bussystemen, die auf dem Master-Slave-Prinzip beruhen, muss der ACFG-Manager 20 immer ein Master sein. Weitere Kommunikationsteilnehmer, die am Bussystem angeschlossen sind, können jeweils die Rolle eines ACFG-Agents 22 - 25 übernehmen.

Der ACFG-Manager 20 weist als Mittel zur Zuordnung von Daten, welche einen weiteren Kommunikationsteilnehmer eindeutig identifizieren zu einer Stationsadresse und zur Kennzeichnung einer Stationsadresse als nicht belegt in einem Speicher eine Datenbasis auf, die so genannte System-MIB (MIB = Management Information Base). In der System-MIB 21 wird jeder möglichen Stationsadresse im Bussystem entweder ein Kommunikationsteilnehmer oder die Information, dass diese Stationsadresse nicht belegt ist, zugeordnet. Der ACFG-Manager 20 kann eigenständig Datenpakete am Bus senden. In FIG 4 sind verschiedene Datenpakete dargestellt. Allgemein werden Datenpakete auch als PDU (PDU = Protocol Data Unit) bezeichnet. Vom ACFG-Manager 20 gesendete PDUs werden als Request-PDUs bezeichnet. Von Kommunikationsteilnehmern als Antwort auf die Request-PDUs gesendete PDUs werden als Response-PDU bezeichnet.

Der ACFG-Manager 20 initiiert einen Kommunikationszyklus, auch ACFG-Zyklus genannt, wobei alle in dem entsprechenden seriellen Bussystem möglichen Stationsadressen angesprochen werden. Im Ausführungsbeispiel der FIG 4 ist ein Kommunikationszyklus zur Zuordnung von Stationsadressen zu Kommunikationsteilnehmern beispielhaft gezeigt. Die zeitliche Abfolge der Datenpakete entspricht prinzipiell der Richtung des Zeitpfeils t. Zu Beginn des Kommunikationszyklus sendet der ACFG-Manager 20 eine so genannte SDD-Request-PDU 34 (SDD = Systems Data Distribution) per Broadcast 27 an alle Teilnehmer im Bussystem. Die SDD-Request-PDU 34 ist ein Ausführungsbeispiel für ein drittes Datenpaket 13 gemäß FIG 3. Mit der SDD-Request-PDU 34 werden alle als nicht belegt gekennzeichneten Stationsadressen durch den ACFG-Manager 20 im Bussystem bekanntgegeben. Jeder ACFG-Agent speichert in jedem ACFG-Zyklus die in der SDD-Request-PDU 34 enthaltene Liste mit freien Busadressen.

Die im Folgenden dargestellten Request-PDUs sind so genannte NAN-Request-PDUs 35 - 40 (NAN = New Agent Notification). Eine NAN-Request-PDU ist ein Ausführungsbeispiel für ein erstes Datenpaket 10 gemäß FIG 2. Die NAN-Request-PDU 35 - 40 enthält gegebenenfalls einen Kommunikationsteilnehmer eindeutig identifizierende Informationen. Der ACFG-Manager 20 schickt an jede verfügbare Stationsadresse 28 - 33 jeweils eine NAN-Request-PDU 35 - 40. Im Falle, dass die Stationsadressen 28, 30 durch keinen Kommunikationsteilnehmer belegt sind, erhält der ACFG-Manager 20 auf die jeweilige NAN-Request-PDU 35 bzw. 37 keine entsprechende Response-PDU. In diesem Fall kennzeichnet der ACFG-Manager 20 in seiner System-MIB diese Stationsadressen als nicht belegt. Alle Stationsadressen, auf denen nicht geantwortet wurde, erhalten z. B. in der System-MIB 21 den Eintrag "free". Alle Stationsadressen mit diesem Eintrag werden am Anfang jedes ACFG-Zyklus mittels einer SDD-Request-PDU 34 an alle Kommunikationsteilnehmer gleichzeitig als Broadcast-Message veröffentlicht.

Wird eine NAN-Request-PDU 36, 40 an eine Stationsadresse 29 bzw. 33 gesendet, welche einem am beschriebenen Verfahren teilnehmenden ACFG-Agent 22 bzw. 25 zugeordnet ist, gesendet, so erhält der ACFG-Manager 20 jeweils eine NAN-Response-PDU 41 bzw. 42, welche den jeweiligen ACFG-Agent 22 bzw. 25 eindeutig identifizierende Daten aufweist. Eine Stationsadresse 29, 33, auf der mit einer solchen korrekten NAN-Response-PDU 41, 42 geantwortet wird, erhält in der System-MIB 21 des ACFG-Managers 20 den Eintrag "ACFG-Agent". Außerdem werden jeweils die übermittelten Daten der jeweiligen NAN-Response-PDU 41, 42 vermerkt. Der Kommunikationsteilnehmer mit dieser Stationsadresse wird im Folgenden mit einer NAN-Request-PDU 36, 40 angesprochen, deren Inhalt der NAN-Response-PDU 41, 42 entspricht. Der Kommunikationsteilnehmer hat somit kontinuierlich die Gewähr, dass er vom ACFG-Manager 20 korrekt als genau dieser ACFG-Agent erkannt und in die System-MIB 21 aufgenommen wurde.

Ist eine Stationsadresse 31 mehreren ACFG-Agents 23, 24 gleichzeitig zugeordnet, so kommt es zu einem Adresskonflikt und der ACFG-Manager 20 erhält ebenfalls keine gültige NAN-Response-PDU und würde diese Stationsadresse 31 in seiner System-MIB 21 als nicht belegt kennzeichnen.

Wird eine NAN-Request-PDU 39 an eine Stationsadresse 32 gesendet, welche von einem Kommunikationsteilnehmer 26 genutzt wird, welcher das beschriebene Verfahren nicht nutzt, so wird dieser Kommunikationsteilnehmer 26 eine PDU 43 an den ACFG-Manager 20 senden, welche jedoch keine diesen Kommunikationsteilnehmer 26 eindeutig identifizierende Daten enthält. Der Kommunikationsteilnehmer 26 wird vom ACFG-Manager 20 als Kommunikationsteilnehmer ohne ACFG-Agent-Funktionalität identifiziert. Der ACFG-Manager 20 wird in diesem Fall der entsprechenden Stationsadresse 32 das Attribut "kein ACFG-Agent" zuordnen. Die Stationsadresse 32 wird weiterhin mit einer NAN-Request-PDU 39 angesprochen. In diesem Fall handelt es sich um die gleiche wie beim vorherigen Ansprechen.

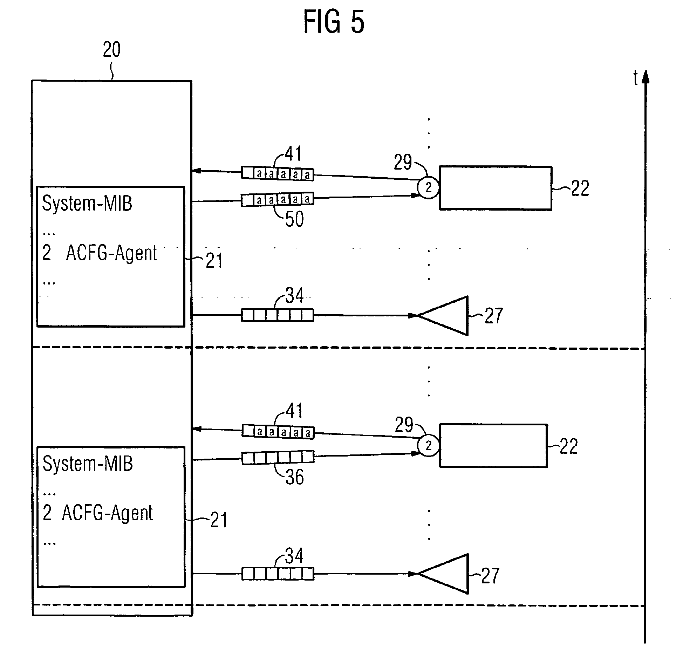

FIG 5 zeigt die Kommunikation zwischen einem ersten Kommunikationsteilnehmer und einem weiteren Kommunikationsteilnehmer ohne Adresskonflikt. Der erste Kommunikationsteilnehmer, entsprechend FIG 4 der ACFG-Manager 20 mit einer System-MIB 21, sendet über einen hier nicht dargestellten Bus Datenpakete an den ACFG-Agent 22. In FIG 5 sind zwei Kommunikationszyklen zur Zuordnung von Stationsadressen dargestellt, wobei der Beginn eines Kommunikationszyklus jeweils durch eine gestrichelte Linie gekennzeichnet wird. Die voranschreitende Zeit wird wiederum durch einen Zeitpfeil t symbolisiert. Im ersten Kommunikationszyklus wird nach der obligatorischen SDD-Request-PDU 34 eine NAN-Request-PDU 36 an die dem ACFG-Agent 22 zugeordnete Stationsadresse 29 gesendet. Der ACFG-Agent 22 sendet daraufhin als Antwort eine NAN-Response-PDU 41 mit Informationen, welche diesen ACFG-Agent 22 eindeutig identifizieren. Der ACFG-Manager 20 ordnet daraufhin in seiner System-MIB diese den ACFG-Agent 22 kennzeichnenden Informationen zur Stationsadresse 29 zu. In einem zweiten folgenden Kommunikationszyklus sendet der ACFG-Manager 20 eine NAN-Request-PDU 50 an die Stationsadresse 29, welche die den ACFG-Agent 22 eindeutig identifizierenden Informationen enthält. Der ACFG-Agent 22 erkennt daraufhin, dass der ACFG-Manager 20 ihn der korrekten Stationsadresse zugeordnet hat und sendet als Antwort wiederum die NAN-Response-PDU 41. Entsprechend dem zweiten Kommunikationszyklus laufen weitere folgende Kommunikationszyklen bezüglich dieser Stationsadresse und dieses ACFG-Agents 22 ab.

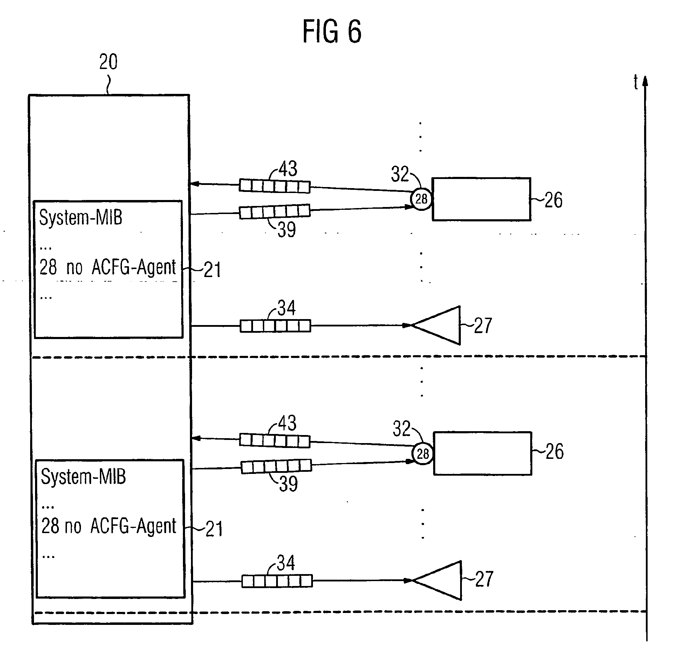

FIG 6 zeigt die Kommunikation zwischen einem ersten Kommunikationsteilnehmer und einem weiteren Kommunikationsteilnehmer, welcher keine Mittel zum Senden von zweiten Datenpaketen aufweist. Der erste Kommunikationsteilnehmer, entsprechend FIG 4 und 5 der ACFG-Manager 20 mit einer System-MIB 21, sendet in einem ersten Kommunikationszyklus eine SDD-Request-PDU 34 an alle Kommunikationsteilnehmer mittels einem Broadcast 27. An die Stationsadresse 32 sendet der ACFG-Manager 20 eine NAN-Request-PDU 39. Der Kommunikationsteilnehmer 26, welchem diese Stationsadresse 32 zugeordnet ist, weist jedoch keine Mittel zum Senden von zweiten Datenpaketen, welche den Kommunikationsteilnehmer eindeutig identifizierende Daten aufweisen, auf und sendet daher als Antwort eine PDU 43, welche keine diesen Kommunikationsteilnehmer 26 eindeutig identifizierende Daten enthält oder der Kommunikationsteilnehmer 26 sendet gar keine Antwort bzw. kein Datenpaket. Der ACFG-Manager 20 ordnet daraufhin in seiner System-MIB der jeweiligen Stationsadresse 32 die Information bzw. das Attribut "kein ACFG-Agent" zu. In allen weiteren Kommunikationszyklen sendet der ACFG-Manager 20 wiederum eine NAN-Request-PDU 39 an die Stationsadresse 32 und erhält vom Kommunikationsteilnehmer 26 als Antwort jeweils eine PDU 43 ohne diesen Kommunikationsteilnehmer identifizierenden Daten.

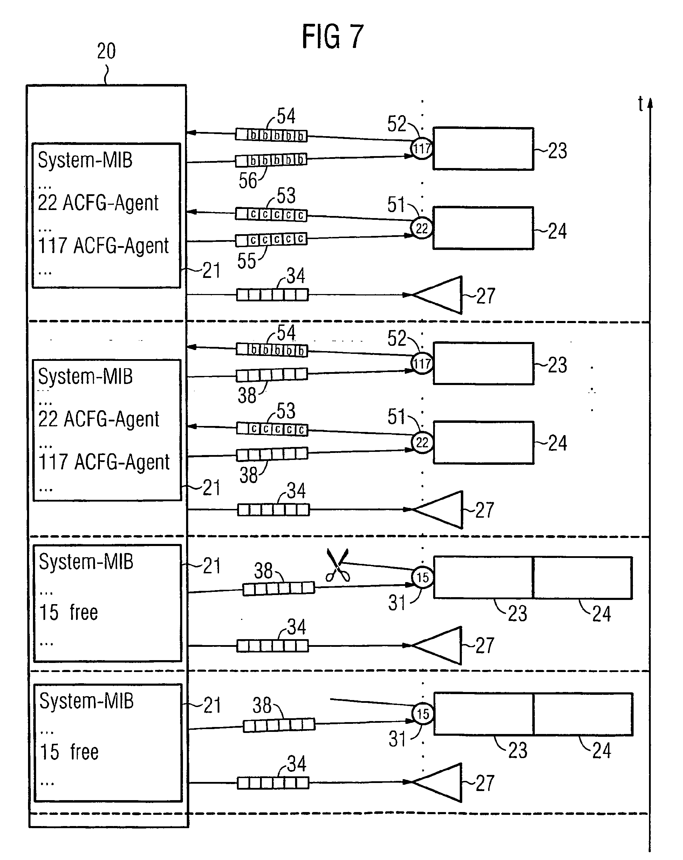

FIG 7 zeigt die Kommunikation zwischen einem ersten Kommunikationsteilnehmer und weiteren Kommunikationsteilnehmern bei Vorliegen eines Adresskonflikts. Dargestellt sind wiederum mehrere in Richtung des Zeitpfeils t aufeinander folgende Kommunikationszyklen, deren Beginn jeweils durch eine gestrichelte Linie gekennzeichnet ist. Der erste Kommunikationsteilnehmer ist im Ausführungsbeispiel gemäß FIG 7 wiederum der ACFG-Manager 20, welcher eine System-MIB 21 zur Zuordnung von Informationen zu Stationsadressen aufweist. Zu Beginn jedes hier dargestellten Kommunikationszyklus sendet der ACFG-Manager 20 per Broadcast 27 eine SDD-Request-PDU 34 an alle Stationsadressen bzw. alle Kommunikationsteilnehmer, welche die Information über nicht belegte Stationsadressen enthält. Im ersten hier dargestellten Kommunikationszyklus sendet der ACFG-Manager 20 eine NAN-Request-PDU 38 an die Stationsadresse 31. Diese Stationsadresse 31 ist jedoch zwei verschiedenen ACFG-Agents 23 und 24 gleichzeitig zugeordnet. Der ACFG-Manager 20 erhält daraufhin keine eindeutig einen einzelnen ACFG-Agent kennzeichnende Response-PDU und kennzeichnet daher in seiner System-MIB 21 die Stationsadresse 31 als nicht belegt.

In einem zweiten Kommunikationszyklus wird dieser als nicht belegt gekennzeichneten Stationsadresse 31 deshalb durch den ACFG-Manager 20 wiederum eine NAN-Request-PDU 38 zugesendet, welche keine einen der beiden ACFG-Agents 23 bzw. 24 eindeutig identifizierende Informationen enthält. Beide ACFG-Agents 23 und 24 erkennen dadurch, dass sie vom ACFG-Manager 20 nicht eindeutig der Stationsadresse 31 zugeordnet werden konnten und wählen sich im Folgenden automatisch eine neue Stationsadresse 51 bzw. 52 aus dem Pool der als nicht belegt gekennzeichneten Stationsadressen, welche per Broadcast 27 durch die SDD-Request-PDU 34 mitgeteilt wurden. Im ACFG-Agent 23, 24 wird also ein Adresskonflikt signalisiert, wenn der ACFG-Agent 23, 24 nach dem Empfang einer NAN-Request-PDU 38 im nächsten ACFG-Zyklus nicht den Inhalt seiner eigenen NAN-Response-PDU empfängt. In diesem Fall zieht sich der ACFG-Agent 23, 24 vom Bus zurück und geht mit einer zufällig gewählten Stationsadresse aus seiner Liste mit freien Stationsadressen wieder an den Bus. Diese Prozedur wird wiederholt, bis die Stationsadresse des ACFG-Agents 23, 24 vom ACFG-Manager 20 erkannt und in dessen System-MIB 21 aufgenommen wurde.

Im dritten hier dargestellten Kommunikationszyklus wird der ACFG-Manager 20 diesen bisher als nicht belegt gekennzeichneten Stationsadressen 51 und 52 eine NAN-Request-PDU 38 ohne einen Kommunikationsteilnehmer eindeutig identifizierende Informationen zusenden. Die ACFG-Agents 23 und 24 beantworten diese NAN-Request-PDU 38 jeweils mit einer NAN-Response-PDU 53 bzw. 54, welche den jeweiligen ACFG-Agents 23 und 24 eindeutig identifizierende Informationen enthalten. Der ACFG-Manager 20 kann daraufhin den Stationsadressen 51 bzw. 52 die entsprechenden Informationen, welche in den NAN-Response-PDUs 53 bzw. 54 enthalten sind, zuordnen. Im folgenden Kommunikationszyklus sendet der ACFG-Manager 20 daraufhin NAN-Request-PDUs 55 und 56 mit den die jeweiligen ACFG-Agents 24 bzw. 23 eindeutig kennzeichnenden Informationen an die jeweilige Stationsadresse 51 bzw. 52. Die ACFG-Agents 23 und 24 antworten mit den entsprechenden NAN-Response-PDUs 54 bzw. 53.

Alle Stationsadressen auf denen ein Adresskonflikt vorliegt, können je nach Bussystem, Topologie und Konfiguration des jeweiligen Bussystems sehr unterschiedliche Reaktionen aufweisen. Innerhalb des beschriebenen Verfahrens zur Autokonfiguration werden die im Folgenden beschriebenen Reaktionen erwartet und bewältigt. In einem ersten Fall empfängt der ACFG-Manager 20 keine Antwort von dieser Stationsadresse, weil das Datenpaket durch Überlagerung so zerstört ist, dass keine Interpretation möglich ist. In diesem Fall wird diese Stationsadresse im nächsten ACFG-Zyklus wiederum mit einer NAN-Request-PDU ohne entsprechende Dateninhalte des ACFG-Agents angesprochen. Der ACFG-Agent erkennt, dass die Kommunikation zum ACFG-Manager 20 nicht erfolgreich war und ändert automatisch seine Stationsadresse. In einem zweiten Fall empfängt der ACFG-Manager 20 eine unbekannte Antwort von dieser Stationsadresse, weil das Datenpaket durch Überlagerung verfälscht aber nicht vollständig zerstört ist. In diesem Fall wird diese Stationsadresse im nächsten ACFG-Zyklus wiederum mit einer NAN-Request-PDU ohne entsprechende Dateninhalte des ACFG-Agents angesprochen. Der ACFG-Agent erkennt auch in diesem Fall, dass die Kommunikation zum ACFG-Manager 20 nicht erfolgreich war und ändert automatisch seine Stationsadresse. In einem dritten Fall empfängt der ACFG-Manager 20 eine korrekte NAN-Response-PDU von dieser Stationsadresse, weil sich eines der Telegramme der verschiedenen ACFG-Agents auf dem Übertragungsmedium elektrisch durchsetzen konnte. Dieses Verhalten ist bei bestimmten Topologien mit sehr langen Busleitungen, Repeatern oder Kopplern zum Verbinden unterschiedlicher physikalischer Medien zu beobachten, wenn sich ein ACFG-Agent sehr nahe am ACFG-Manager 20 befindet und ein weiterer ACFG-Agent relativ weit weg ist oder sich in einem anderen Bussegment befindet. Daraus ergeben sich für die beiden ACFG-Agents sehr unterschiedliche Antwortzeiten. In diesem Fall sendet der ACFG-Manager 20 im nächsten Zyklus eine NAN-Request-PDU mit den Dateninhalten eines der ACFG-Agents. Alle anderen ACFG-Agents, die sich auf dieser Stationsadresse befinden, erkennen, dass die Kommunikation zum ACFG-Manager 20 nicht erfolgreich war und ändern ihre Stationsadresse.

Gemäß einem weiteren Ausführungsbeispiel werden alle für eine automatische Konfiguration notwendigen Geräteinformationen direkt im Speicher der ACFG-Agents hinterlegt. Dieser Speicher ist über den Bus vom ACFG-Manager 20 aus eindeutig adressierbar, so dass der ACFG-Manager 20 alle für die Konfiguration notwendigen Geräteinformationen automatisch aus den ACFG-Agents auslesen kann. Für das Auslesen wird z. B. ein nachrichtenorientiertes Übertragungsverfahren, wie es bei den meisten seriellen Bussystemen bereits definiert ist, benutzt. Somit steht in der System-MIB 21 des ACFG-Manager 20 jederzeit ein aktuelles Abbild der Geräteinformationen jedes am seriellen Bus befindlichen ACFG-Agents zur Verfügung. Die Geräteinformationen bestehen im Wesentlichen aus einer Identifikation sowie möglichen Konfigurationen und Parametrierungen. Auf der Grundlage dieser Daten ist die Projektierung des seriellen Busses ohne extra vom Hersteller gelieferte Geräteinformationen in Form von elektronischen Datenblätter möglich.

Gemäß einer weiteren Ausgestaltung ist es möglich im ACFG-Manager 20 erwartete Projektierungsdaten vorzugeben. In diesem Fall werden die erwarteten Projektierungsdaten mit dem tatsächlichen Istzustand am seriellen Bus verglichen und eventuelle Abweichungen angezeigt. Dies wird mit Hilfe von entsprechenden Anzeigen an allen ACFG-Agents sichtbar gemacht, so dass der Projektierungsfortschritt sowie Fehlerfälle in jedem Winkel einer Anlage erkennbar sind. Damit steht einem Projektierer stets eine Gegenüberstellung der projektierten Kommunikationsteilnehmer mit deren Konfiguration und Parametrierung und der tatsächlich am seriellen Bus vorherrschenden Situation zur Verfügung. Somit können Projektierungsfehler, Fehler beim Aufbau des Bussystem, Fehler bei der Verkabelung und der Wahl der Kommunikationsteilnehmer an einer zentralen Stelle wesentlich leichter analysiert und entsprechend behoben werden.

Bei der Angabe von erwarteten Projektierungsdaten ist es möglich aber nicht notwendig gewünschte Stationsadressen für alle am Bus befindlichen Kommunikationsteilnehmer zu vergeben. Falls Stationsadressen projektiert wurden, sind diese aufgrund des Verhaltens bei der Auflösung von Adresskonflikten sehr einfach vom ACFG-Manager 20 zu vergeben. Innerhalb weniger Iterationsschritte über alle Stationsadressen können nacheinander alle projektierten Stationsadressen zugewiesen werden. Dabei wiederum entstehende Adresskonflikte werden von den ACFG-Agents selbständig aufgelöst. Dabei nehmen nur noch die ACFG-Agents, denen noch keine projektierte Stationsadresse zugeordnet wurde, temporär eine zufällige freie Stationsadresse an. Alle anderen ACFG-Agents behalten ihre explizit zugeordnete Stationsadresse bei.

Eine weitere Ausgestaltung des Verfahrens betrifft die eindeutige Identifizierung von Kommunikationsteilnehmern, sofern dies anhand der Projektierungsdaten nicht möglich ist. In diesem Fall wird zwischen dem ACFG-Manager 20 und den ACFG-Agents, die der Projektierung nicht zugeordnet werden können, ein azyklischer Kommunikationskanal geöffnet. Mittels einer Sequenz von Lese- und Schreibbefehlen und entsprechenden Anzeigen und Eingabehilfsmitteln bei den ACFG-Agents erfolgt eine manuelle Identifizierung.

Zusammengefasst betrifft die Erfindung somit ein Verfahren zur vereinfachten Zuordnung von Stationsadressen 6 zu Kommunikationsteilnehmern 2 in einem Bussystem 9 sowie Kommunikationsteilnehmer 1, 2 in einem Bussystem 9. Genau ein erster Kommunikationsteilnehmer 1, welcher selbstständig am Bus 3 senden kann, kann dabei einer Stationsadresse 6 Daten zuordnen, welche einen weiteren Kommunikationsteilnehmer 2 eindeutig identifizieren, oder eine Stationsadresse 6 als nicht belegt kennzeichnen. Ein weiterer Kommunikationsteilnehmer 2, welcher in einem früheren Kommunikationszyklus bereits ein Datenpaket mit diesen Kommunikationsteilnehmer 2 eindeutig identifizierenden Daten an den ersten Kommunikationsteilnehmer 1 gesendet hat und welcher in einem späteren Kommunikationszyklus ein Datenpaket 10 mit Daten, welche diesen Kommunikationsteilnehmer 2 nicht eindeutig kennzeichnen, empfängt, kann seine Stationsadresse 6 automatisch in eine als nicht belegt gekennzeichnete Stationsadresse 6 ändern.

## Patentansprüche

1. Verfahren zur Zuordnung von Stationsadressen (6) zu Kommunikationsteilnehmern (2) in einem Bussystem (9), wobei genau ein erster Kommunikationsteilnehmer (1), welcher selbstständig an einem Bus (3) senden kann, einer Stationsadresse (6) Daten zuordnen kann, welche einen weiteren Kommunikationsteilnehmer (2) eindeutig identifizieren, oder eine Stationsadresse (6) als nicht belegt kennzeichnen kann, bei welchem Verfahren jeweils in einem Kommunikationszyklus
• der erste Kommunikationsteilnehmer (1) jeweils ein erstes Datenpaket (10) an jede Stationsadresse (6) sendet, wobei das erste Datenpaket (10) der jeweiligen Stationsadresse (6) zugeordnete Daten, welche einen weiteren Kommunikationsteilnehmer (2) eindeutig identifizieren, enthält,
• ein oder mehrere weitere Kommunikationsteilnehmer (2) jeweils ein zweites Datenpaket mit ihrer Stationsadresse (6) und den jeweiligen weiteren Kommunikationsteilnehmer (2) eindeutig identifizierenden Daten an den ersten Kommunikationsteilnehmer (1) senden, wobei die den jeweiligen weiteren Kommunikationsteilnehmer (2) eindeutig identifizierenden Daten vom ersten Kommunikationsteilnehmer (1) der jeweiligen Stationsadresse (6) zugeordnet werden und
• der erste Kommunikationsteilnehmer (1) ein drittes Datenpaket (13) mit der Information, welche Stationsadressen (6) als nicht belegt **gekennzeichnet** sind, an alle weiteren Kommunikationsteilnehmer (2) sendet,
wobei ein Kommunikationsteilnehmer (2), welcher in einem früheren Kommunikationszyklus bereits ein zweites Datenpaket mit diesen Kommunikationsteilnehmer (2) eindeutig identifizierenden Daten an den ersten Kommunikationsteilnehmer (1) gesendet hat und welcher in einem späteren Kommunikationszyklus ein erstes Datenpaket (10) mit Daten, welche diesen Kommunikationsteilnehmer (2) nicht eindeutig kennzeichnen, empfängt, seine Stationsadresse (6) automatisch in eine der als nicht belegt gekennzeichneten Stationsadressen (6) ändert.

2. Verfahren nach Anspruch 1,
**dadurch gekennzeichnet,**
**dass** die Zyklusdauer des Kommunikationszyklus variabel ist.

3. Verfahren nach einem der vorhergehenden Ansprüche,
**dadurch gekennzeichnet,**
**dass** Geräteinformationen in Speichermitteln der weiteren Kommunikationsteilnehmer (2) speicherbar sind, wobei die Speichermittel über den Bus (3) vom ersten Kommunikationsteilnehmer (1) adressierbar sind und die Geräteinformationen vom ersten Kommunikationsteilnehmer (1) auslesbar sind.

4. Verwendung eines Verfahrens nach Anspruch 3 zur Projektierung eines Bussystems (9).

5. Kommunikationsteilnehmer (1) in einem Bussystem (9), welcher selbstständig an einem Bus (3) senden kann und
• Mittel zur Zuordnung von Daten, welche einen weiteren Kommunikationsteilnehmer (2) eindeutig identifizieren, zu einer Stationsadresse (6) aufweist, wobei der erste Kommunikationsteilnehmer (1) jeweils ein erstes Datenpaket (10) an jede Stationsadresse (6) sendet, wobei das erste Datenpaket (10) der jeweiligen Stationsadresse (6) zugeordnete Daten, welche einen weiteren Kommunikationsteilnehmer (2) eindeutig identifizieren, enthält, und
• Mittel zur Kennzeichnung einer Stationsadresse (6) als nicht belegt aufweist, wobei der erste Kommunikationsteilnehmer (1) ein drittes Datenpaket (13) mit der Information, welche Stationsadressen (6) als nicht belegt **gekennzeichnet** sind, an alle weiteren Kommunikationsteilnehmer (2) sendet.

6. Kommunikationsteilnehmer (2) in einem Bussystem (9), welcher Mittel (8) zum Senden von zweiten Datenpaketen mit den Kommunikationsteilnehmer (2) eindeutig identifizierenden Daten an einen ersten Kommunikationsteilnehmer (1) aufweist und welcher seine Stationsadresse (6) automatisch ändern kann, wobei der Kommunikationsteilnehmer (2) zur automatischen Änderung seiner Stationsadresse (6) in eine als nicht belegt gekennzeichnete Stationsadresse (6) vorgesehen ist, wenn der Kommunikationsteilnehmer (2) in einem früheren Kommunikationszyklus bereits ein zweites Datenpaket mit ihn eindeutig identifizierenden Daten an den ersten Kommunikationsteilnehmer (1) gesendet hat und der Kommunikationsteilnehmer (2) in einem späteren Kommunikationszyklus ein erstes Datenpaket (10) mit Daten, welche ihn nicht eindeutig kennzeichnen, empfängt.

## Claims

1. Method for allocating station addresses (6) to communication users (2) in a bus system (9), whereby exactly one first communication user (1) able to transmit automatically on a bus (3) can allocate data to a station address (6), said data uniquely identifying another communication user (2), or can characterise a station address (6) as non-occupied, in which method in each communication cycle
• the first communication user (1) in each case sends a first data packet (10) to each station address (6), whereby the first data packet (10) contains data allocated to the respective station address (6), said data uniquely identifying another communication user (2),
• one or more other communication users (2) each send the first communication user (1) a second data packet containing their station address (6) and the data uniquely identifying the respective other communication user (2), whereby the data uniquely identifying the respective other communication user (2) is allocated to the respective station address (6) by the first communication user (1) and
• the first communication user (1) sends all other communication users (2) a third data packet (13) containing the information about which station addresses (6) are
**characterised** as non-occupied,
whereby a communication user (1) that in an earlier communication cycle already sent the first communication user (1) a second data packet containing data uniquely identifying this communication user (2) and that in a subsequent communication cycle receives a first data packet (10) containing data not uniquely identifying this communication user (2) automatically alters the station address (6) thereof to one of the station addresses (6) **characterised** as non-occupied.

2. Method according to claim 1, **characterised in that** the cycle duration of the communication cycle is variable.

3. Method according to one of the preceding claims, **characterised in that** device information can be stored in storage means of the other communication users (2), whereby the storage means can be addressed via the bus (3) by the first communication user (1) and the device information can be read out by the first communication user (1).

4. Use of a method according to claim 3 for project planning of a bus system (9).

5. Communication user (1) in a bus system (9) which can automatically transmit on a bus (3) and has
• means for allocating to a station address (6) data uniquely identifying another communication user (2), whereby the first communication user (1) in each case sends a first data packet (1) to each station address (6), whereby the first data packet (10) contains data allocated to the respective station address (6), said data uniquely identifying another communication user (2), and
• means for characterising a station address (6) as non-occupied, whereby the first communication user (1) sends all other communication users (2) a third data packet (13) containing the information about which station addresses (6) are **characterised** as non-occupied.

6. Communication user (2) in a bus system (9), having means (8) for sending a first communication user (1) second data packets containing data uniquely identifying the communication user (2) and being able automatically to alter the station address (6) thereof, whereby the communication user (2) is provided to automatically alter the station address (6) thereof to a station address (6) **characterised** as non-occupied, if the communication user (2) in an earlier communication cycle already sent the first communication user (1) a second data packet containing data uniquely identifying this communication user (2) and that in a subsequent communication cycle the communication user (2) receives a first data packet (10) containing data not uniquely identifying this communication user (2).

## Revendications

1. Procédé d'association d'adresses de station (6) à des abonnés de communication (2) dans un système de bus (9), dans lequel exactement un premier abonné de communication (1) qui peut émettre de façon autonome sur un bus (3) peut associer à une adresse de station (6) des données qui identifient sans équivoque un autre abonné de communication (2) ou peut caractériser une adresse de station (6) comme non occupée, procédé dans lequel, à chaque fois, dans un cycle de communication :
• le premier abonné de communication (1) envoie à chaque fois un premier paquet de données (10) à chaque adresse de station (6), le premier paquet de données (10) contenant des données qui sont associées à l'adresse de station respective (6) et qui identifient sans équivoque un autre abonné de communication (2),
• un ou plusieurs autres abonnés de communication (2) envoient à chaque fois un deuxième paquet de données avec leur adresse de station (6) et avec des données identifiant sans équivoque l'autre abonné de communication respectif (2) au premier abonné de communication (1), les données identifiant sans équivoque l'autre abonné de communication respectif (2) étant alors associées à l'adresse de station respective (6) par le premier abonné de communication (1), et
• le premier abonné de communication (1) envoie un troisième paquet de données (13) avec l'information indiquant quelles adresses de station (6) sont **caractérisées** comme non occupées à tous les autres abonnés de communication (2),
un abonné de communication (2), qui a déjà envoyé dans un cycle de communication précédent un deuxième paquet de données avec des données identifiant sans équivoque cet autre abonné de communication (2) au premier abonné de communication (1) et qui reçoit dans un cycle de communication suivant un premier paquet de données (10) avec des données qui ne caractérisent pas sans équivoque cet abonné de communication (2) change automatiquement son adresse de station (6) en l'une des adresses de station (6) **caractérisées** comme non occupées.

2. Procédé selon la revendication 1,
**caractérisé par le fait que** la durée du cycle de communication est variable.

3. Procédé selon l'une des revendications précédentes,
**caractérisé par le fait que** des informations d'appareil sont mémorisables dans des moyens de mémorisation des autres abonnés de communication (2), les moyens de mémorisation étant adressables par l'intermédiaire du bus (3) par le premier abonné de communication (1) et les informations d'appareil étant lisibles par le premier abonné de communication (1).

4. Utilisation d'un procédé selon la revendication 3 pour le développement d'un système de bus (9).

5. Abonné de communication (1) dans un système de bus (9), qui peut émettre de façon autonome sur un bus (3) et qui comporte :
• des moyens pour l'association de données, qui identifient sans équivoque un autre abonné de communication (2), à une adresse de station (6), le premier abonné de communication (1) envoyant à chaque fois un premier paquet de données (10) à chaque adresse de station (6), le premier paquet de données (10) contenant des données qui sont associées à l'adresse de station respective (6) et qui identifient sans équivoque un autre abonné de communication (2), et
• des moyens pour la caractérisation d'une adresse de station (6) comme non occupée, le premier abonné de communication (1) envoyant un troisième paquet de données (13) avec l'information indiquant quelles adresses de station (6) sont **caractérisées** comme non occupées à tous les autres abonnés de communication (2).

6. Abonné de communication (2) dans un système de bus (9), qui comporte des moyens (8) pour l'envoi de deuxièmes paquets de données avec des données identifiant sans équivoque l'abonné de communication (2) à un premier abonné de communication (1) et qui peut changer automatiquement son adresse de station (6), l'abonné de communication (2) étant prévu pour changer automatiquement son adresse de station (6) en une adresse de station (6) **caractérisée** comme non occupée lorsque l'abonné de communication (2) a déjà envoyé dans un cycle de communication précédent un deuxième paquet de données avec des données l'identifiant sans équivoque au premier abonné de communication (1) et lorsque l'abonné de communication (2) reçoit dans un cycle de communication suivant un premier paquet de données (10) avec des données qui ne le caractérisent pas sans équivoque.
